# EUROPEAN PATENT APPLICATION

(11) **EP 2 465 599 A1**
(43) Date of publication of application: **20.06.2012**
(21) Application number: 09848186.4
(22) Date of filing: 29.09.2009
(51) Int. Cl.: B01D 53/68, C08J 11/10

(54) **CONTINUOUS DECHLORINATION PROCESS AND EQUIPMENT THEREOF**

(30) Priority: 13.08.2009 CN 200910017615
(71) Applicant: Niu, Bin, Shandong 250001 (CN)
(72) Inventor: Niu, Bin, Shandong 250001 (CN)
(74) Representative: Grünecker, Kinkeldey, Stockmair & Schwanhäusser
(86) International application number: PCT/CN2009/074303
(87) International publication number: WO 2011/017856

(57) **Abstract**

A continuous dechlorination process, including: heating and extrusion transport of materials, followed by a loose handling and exhausting gases. Then, the solid material is discharged through the discharge port. A continuous dechlorination equipment, including: a cylinder unit with inlet and discharge port is equipped with a heating body. The cylinder unit is designed with the extruding and conveying mechanism (3), which is equipped with a loose handling body(4) with outlet(5) in the rear.

## Description

Field of the Invention

This invention is a process and equipment that specifically absorbs HCl, particularly suitable for the absorption of HCl produced in plastic pyrolysis.

Background of the Invention

In industrial production, there are many chemical materials containing chlorine, which after the material is heated, will react with hydrogen to generate hydrogen chloride. For example, the waste plastics from everyday life may contain PVC. As the heating process goes forward, it will produce a lot of hydrogen chloride. It will not only affect the environment and harm the body, and can also cause corrosion of equipment. To solve this problem, the material will generally first be classified, and then placed in the treatment on the different types of materials. This will naturally increase the number of processes and production costs, while also complicating operation.

Contents of the invention

This invention provides a process and equipment that can achieve direct, continuous operation of the hybrid materials dechlorination, and also effectively in prevention of leaks.

This invention comes with a technical solution that is available for heating the chlorine-containing materials. Chlorine generates HCl, which is mixed with the exhaust gas, thus removing the chlorine that is contained in the material. In furtherance of this process, the implementation of the present invention provides the following process: First, heat the material and extrude for delivery; then, make the material loose and exhaust gases. Subsequently, the solid material is discharged through the outlet. This invention requires the use of the method for heating the material, which will be very closely pressurized in the heating process. This approach not merely enables the separation of chlorine from the material, and also the compaction of the material can form a seal at the end of the process to achieve the isolation from the next step. Along with this, the exhaust gas produced in the material does not return so as to prevent leakage of HCl gas. After the completion of the process, the material will be loosened to fully release the HCl within. As a result, the achieved seal in the course of the material movement ensures the continuity of dechlorination process, along with safety and environmental features.

After the chlorine treatment of the material, during the next process sealing may be required.

At this point, the loosened material needs the sealing before coming into the next process, namely, the sealing operation can be done at the discharge port. Specifically, it is either allowed to use complicated seal structure, or making the seal on the material itself. For example: the loosened material can be extruded again and transported to the discharge port. On this basis, in order to ensure the sealing effect, the extruded material can be discharged via a section of storage chamber, which can either be separately set, or designed as a channel. This storage chamber can have a section of compacted material stored inside. Moreover, in the absence of follow-up material, this part of the material will remain in such a sealed storage space. Upon pushing by the follow-up materials, this part of the material will be discharged from the discharge port, whilst the follow-up materials take over the job to form another seal structure.
Obviously, this invention has taken the ingenious structure to achieve continuous sealing characteristics.

In addition to the general propulsion method, the extrusion and convey of materials can also be achieved through the use of a variable pitch screw discharger, and the loosening process achieved by means of providing a larger space for materials. For example: a simple expansion of the chamber cross-section can naturally lead to a loose material state. This can also be done by using a screw discharger with larger pitches or a club in a separate or simultaneous beating operation. Club beating may complete the loosening process in a faster and more efficient manner.

Gas discharged at the exhaust port contains a lot of HCl, which can be applied directly. Without this requirement, it should be absorbed with lye. These gases can enter the process of absorption through the straight venturi, where the flow rate of lye helps.

The equipment used to implement the above process includes a cylinder with the inlet and outlet ports, and a heating sector. Additionally, the cylinder is also designed with an extrusion conveyor, behind which a loosening body with an outlet is attached. This equipment has the structure that corresponds to the process to achieve dechlorination purposes.

According to processing requirements, the outlet of cylinder needs to be set up with a sealing mechanism to prevent the HCl into the next process. Specifically, the complex mechanical structure or simple, practical ways can either be used. For example, a follow-up extrusion conveyor is set behind the loosening body. This body can have the loosened material be extruded compact again to form a seal on the discharge port. To ensure the sealing effect, it is best to set a material storage chamber between the extrusion conveyor and the discharge port. In addition, the loosening body used in this invention is mounted on the shaft and arranged in a spiral state, at least being a group of rod bodies, or other toggling bodies.

The present invention has the extrusion bodies in the above-mentioned equipment that may be a push plate in reciprocating or a screw propeller with a tapering pitch. They all can achieve the extrusion process and the delivery of materials as required. Extrusion conveyor, loosing body and the follow-up extrusion conveyor can be arranged in a different chamber. To simplify the device structure, they can also be arranged in the same chamber, with the appropriate bodies setting in the same shaft, i.e., extrusion conveyor, loosening body and follow-up extrusion conveyor) being driven with the same shaft.

When the exhaust HCl needs absorption treatment, the gas outlet is connected via venturi (10) to the absorbing tower (11), where at the inlet of venturi (10) is set with a lye inlet.

Illustration

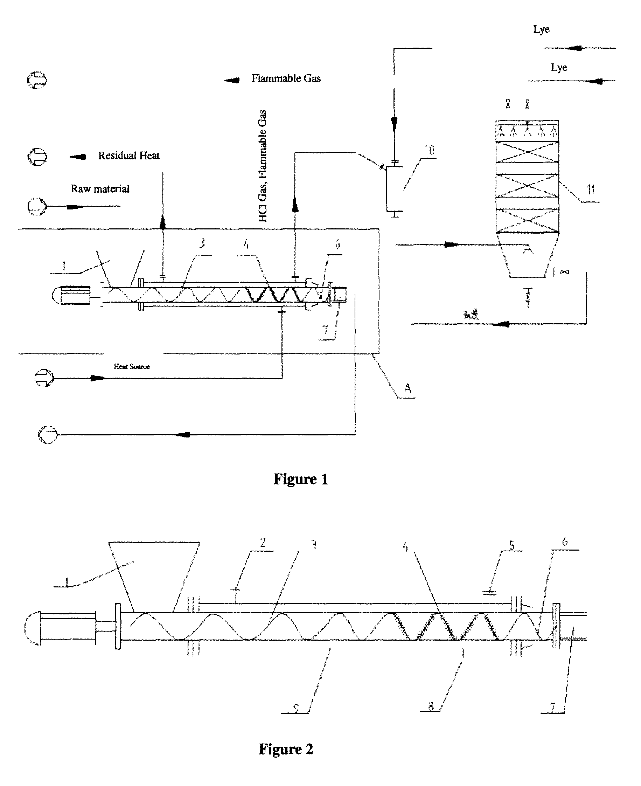

Fig. 1 is the device view for Instance 4 of the invention.

Fig. 2 is the enlarged view of Part A in Fig. 1

Here, 1. Feeding Hopper, 2. Heating Media Export, 3. Extrusion Conveyor, 4. Loosing Body, 5. Gas Outlet, 6. Follow-up extrusion conveyor, 7. Material Storage Chamber, 8. Hot Media Inlet, 9. Heating Chamber, 10. Venturi Tube, 11. Absorbing tower.

Implementation

Example 1:

The process of Instance 1 involves the heating and the extruded convey, followed by loosening of the material. Whilst discharging the gas, the solid materials are carried to outlet for discharge.

The equipment used to implement the above process includes inlet and outlet, and a cylinder equipped with a heating body. Inside the cylinder, there is a plate of reciprocating extrusion conveyor appropriate to the inner wall of the cylinder, through the inlet. In the back of the extrusion conveyor, there is a loosening mixer with an outlet behind for discharging material.

The following devices are also available for completing the above process: the extrusion conveyor chamber with a heating body, and the connected loosening chamber. Inside the extrusion conveyor chamber is mounted with a variable pitch screw, and it works to achieve the simultaneous convey and extrusion operation. Materials are extruded compact at the end, and got sealed at the outlet of the chamber. The loosening chamber is vertically positioned with an outlet for gas exhaustion, and the outlet for materials discharge at the lower part. The cross-section area of the chamber is large than that of the outlet for material discharge of the extrusion conveyor chamber. Inside the loosening chamber is equipped with some rods fixed to the vertical shaft. The rods are driven by a motor.

Example 2:

The process illustrated in this instance involves the heating and the extruded convey, followed by loosening of the material.

After discharging the gas, the solid materials are also carried to outlet for discharge, where a sealing mechanism is set for it.

The equipment used to implement the above process includes inlet and outlet, and a cylinder equipped with a heating body. Inside the cylinder, there is an extrusion conveyor, behind which a loosening body with gas outlet is placed as the rods in different forms being fixed to the cylinder. In the back of the loosening body is set with a follow-up extrusion conveyor affiliated to the extrusion conveyor to form the sealing mechanism.

The following devices are also available for completing the above process: Apart from outlet and inlet, a cylinder comes with a heating device. Inside the cylinder, there is an extrusion conveyor, behind which a loosening body with gas outlet is placed as the rods being fixed to the cylinder. In the back of it, the follow-up extrusion conveyor is provided correlated to the extrusion conveyor. The storage chamber is arranged at the outlet, just behind the extrusion conveyor.

Example 3:

The process illustrated in this instance involves the heating and the extruded convey, followed by loosening of the material. After discharging the gas, the solid materials are also carried to outlet for discharge. The outlet is designed with a seal. The mentioned extruded conveyor works by using a variable pitch screw.

The equipment used to implement the above process includes inlet and outlet, plus a cylinder with a heating device. Inside the cylinder, there is an extrusion conveyor, behind which a loosening body with gas outlet is placed, the rods being fixed to the cylinder. In the back of the loosening body is set with a follow-up extrusion conveyor affiliated to the extrusion conveyor. Extrusion conveyor is responsible for straightly discharging materials. The storage chamber is arranged at the outlet, just behind the extrusion conveyor.

The equipment used to implement the above process includes inlet and outlet, plus a cylinder with a heating device. Inside the cylinder, there is an extrusion conveyor, which works by using a variable pitch screw. Behind it a loosening body with gas outlet is placed, where one or more groups of rods are fixed to the cylinder and arranged in different ways. For example, they can either be a or more groups of rods being radically arranged outside the shaft, or with the whole rods still kept in a spiral placement, where the pitch is larger than that of the extrusion conveyor in the back. Behind the loosening body is the follow-up extrusion conveyor, which has a structure being affiliated to the extrusion conveyor. Material is discharged directly through the extrusion conveyor. The storage chamber is arranged at the outlet, just behind the extrusion conveyor.

The equipment used to implement the above process includes inlet and outlet, plus a cylinder with a heating device. Inside the cylinder, there is an extrusion conveyor, which works by using a variable pitch screw. Behind it a loosening body with gas outlet is placed, where the rods are fixed to the cylinder and arranged in different ways. For example, they can either be a or more groups of rods being radically arranged outside the shaft, or with the whole rods still kept in a spiral placement, where either the pitch or cross-section should respectively be larger than that of the extrusion conveyor in the back. Behind the loosening body is the follow-up extrusion conveyor, which has a structure being affiliated to the extrusion conveyor. Extrusion conveyor, loosening body and the follow-up extrusion conveyor are arranged on the same shaft. Material is discharged directly through the follow-up extrusion conveyor. The storage chamber is arranged at the outlet, just behind the extrusion conveyor.

Example 4:

The process illustrated in this instance involves the heating and the extruded convey, followed by loosening of the material. After discharging the gas, the solid materials are also carried to outlet for discharge. The outlet is designed with a seal. The mentioned extruded conveyor works by using a variable pitch screw. The gas discharged at the outlet generates HCl, which comes with the lye through the venturi for absorption. The flow rate of the lye helps the gas come into the absorption process.

The equipment used to accomplish the above process may be the following device: It includes the inlet and outlet, plus a cylinder with a heating device. Outside the mentioned the cylinder of the heating device has a heating chamber 9 with the inlet 8 of the heating media and the outlet 2 of the heating media. At the material inlet is set with a feeding hopper 1. Inside the cylinder is set with the extrusion conveyor 3, which works on a variable pitch screw. Also behind it, there is a loosening body 4 with an outlet 5. the loosening body 3 is comprised of a group of rods being fixed to the shaft. The rods are radically outward, and wholly arranged in a spiral placement, where the pitch is larger than that of the conveyor 3 in the back part, or the inner radius of that part of cylinder is large than that thereof. Behind the loosening body 4, a follow-up extrusion conveyor 6 is placed, and it is structured affiliated to the extrusion conveyor. Extrusion conveyor 3, loosening body 4 and the follow-up extrusion conveyor 6 are arranged on the same shaft. After the treatment of the extrusion conveyor 6, the material is discharged directly. Alternatively, a storage chamber 7 is attached to the back, at the outlet. Gas outlet 5 is connected, via the venturi 10, to the absorber 11. At the inlet of venturi 10, an inlet for lye flowing is designed.

## Claims

1. Continuous dechlorination process, wherein: First of all, the material is heated and extruded for convey, followed by a loosening treatment, While the gas is let out, the solid material is carried to the outlet for discharge.

2. According to Claim 1, wherein: the material outlet comes with a seal.

3. According to Claim 2, wherein: after the loosening treatment, the material will go through the second follow-up extrusion and then sent to the outlet.

4. According to Claim 3, wherein: the material, after the follow-up extrusion, is discharged through a section of space for the storage chamber.

5. According to any item of the Claim 1∼4, wherein: the step of extruding the raw materials is achieved by a screw conveyor unit having variable pitch and the pitch is becoming smaller.

6. According to any item of the Claim 1∼5, wherein: The gas discharged from the outlet contains HCl, which will then, along with lye, come through the venturi into the absorption process. By control of the lye's flow rate, the gas coming into the absorption can be affected.

7. A kind of continuous dechlorination process, wherein: It includes inlet and outlet, plus a cylinder with a heating body. Inside the cylinder there is an extrusion conveyor (3), behind which is a loosening body (4) with gas outlet (5).

8. According to Claim 7, wherein: the material outlet of the cylinder is designed with a seal.

9. According to Claim 8, wherein: a follow-up extrusion conveyor (6) is set behind the loosening body (5).

10. According to Claim 9, wherein: a storage chamber (7) is set between the follow-up extrusion conveyor (6) and the material outlet.

11. According to any item of the Claim 7∼10, wherein: the mentioned loosening body (5) is one or more groups of rods that are separately or simultaneously mounted to the shaft and arranged in a spiral placement, plus a chamber body with a cross-section area being larger than that of the extrusion conveyor.

12. According to any item of the Claim 7∼11, wherein: The mentioned extrusion conveyor (3) is a screw conveyor unit having variable pitch and the pitch is becoming smaller.

13. According to any item of the Claim 7∼12, wherein: The extrusion conveyor (3), loosening body (4) and the follow-up extrusion conveyor (6) are placed on the same shaft.

14. According to any item of the Claim 7∼13, wherein: the gas outlet is connected via venturi (10) to the absorbing tower (11), where at the inlet of venturi (10) is set with a lye inlet.
